# EUROPEAN PATENT APPLICATION

(11) **EP 1 983 271 A1**
(43) Date of publication of application: **22.10.2008**
(21) Application number: 07380106.0
(22) Date of filing: 16.04.2007
(51) Int. Cl.: F24F 5/00

(54) **Cooling appliance**

(71) Applicant: Practical Technology, S.L., 46960 Aldaia, Valencia (ES)
(72) Inventor: Orts Lorente, Carlos, 46960 Aldaia (Valencia) (ES)
(74) Representative: Canadell-Isern, Roberto

(57) **Abstract**

Cooling appliance, which consists of a main tank (1) into which the water at ambient temperature is introduced. Thanks to a pump (2), this water is moved vertically to another cooling tank (3), where some compressors (7) cool the water. The now cold water then falls by gravity to a drip tank (8). This drip tank (8) is provided with micro-openings through which the water again falls by gravity to pass through a filter (9). In practice, this filter (9) is made of several layers of porous material that become soaked with water and, thanks to a fan (10), the cold air is expelled to the exterior.

## Description

### OBJECT

The object to which the invention protected by this Patent refers is a "Cooling appliance", which can be used to cool an enclosure and does not present the drawbacks of conventional air conditioning equipment.

### BACKGROUND

With the arrival of heat in the summer months, air conditioning equipment is operated at full load. Capable of transforming warm air in a room into a cool environment, these appliances have become indispensable. Installation of air conditioning equipment in a home or office seems to be imperative in those places where the heat becomes unbearable.

As for the operation of air conditioning equipment, the conventional system prevails. This system consists of two units: an interior unit and another exterior unit. These two devices are communicated by a circuit, and inside this circuit there is a cooling liquid. While on the inside the coolant evaporates because it absorbs the heat, the exterior unit retransforms the coolant into a liquid and exhausts the hot air. Therefore, thanks to the coolant and some air cooling compressors, cold air is produced inside the home and the heat is expelled outside the home. The main drawback of conventional systems is the necessity of installing the two units, which requires masonry work.

Moreover, as described above, these appliances use cooling gases that damage the ozone layer or are greenhouse gases, require quite a high energy consumption, and give off hot air outside the home. Consequently, there is a need for a cooling system that does not involve all the above mentioned drawbacks.

The systems commonly called "air coolers" are cooling appliances consisting of only one unit, and they may be installed anyplace, at the user's discretion, and perform the same function as a conventional air conditioning device. Nevertheless, the drawback of these appliances is that the user has to put cold water or, alternatively, ice into their built-in internal tank.

### DESCRIPTION OF THE INVENTION

The purpose of the invention that comprises the object of this Patent is to eliminate some structural and functional drawbacks inherent in the known object, and it has been designed and developed in keeping with this preeminent purpose.

The cooling appliance consists of a main tank into which water at ambient temperature is introduced. Thanks to a pump, this water is moved vertically to another cooling tank where a PCB (intelligent system) controls the measurement of the enclosure's inside and outside temperature by means of sensors, measures the temperature differential, and connects some compressors that rapidly reach the appropriate temperature for cooling the water.

The now cold water then falls by gravity to a drip tank. This drip tank is provided with micro-openings through which the water again falls by gravity to pass through a filter. In practice, this filter is made of several layers of porous material that become soaked with water and, thanks to a fan, the cold air is expelled to the exterior. The above mentioned PCB also controls proper operation of the water pump, the compressors and the fan power, to achieve optimal cooling.

The appliance covered by the invention is cheaper than conventional air conditioning equipment because the energy consumption is much lower, it is more ecological because it does not use greenhouse gases and, moreover, the user does not have to put cold water into the tank.

### BRIEF DESCRIPTION OF THE DRAWINGS

To complement the description of the invention and to facilitate interpretation of the structural and functional features of its object, a drawing is attached hereto that schematically shows a preferential execution of the cooling appliance that comprises the object of this Patent. In this drawing:

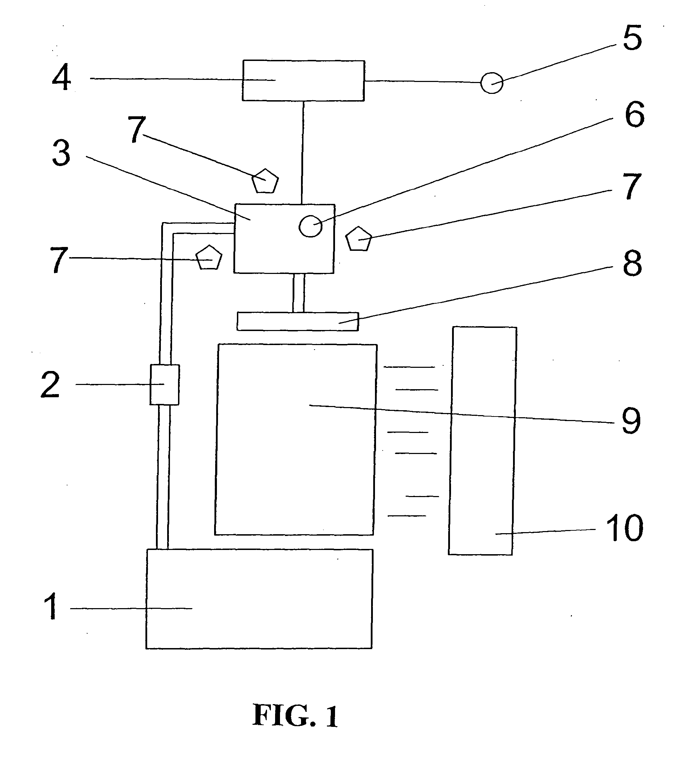

- Figure 1 shows a schematic representation of the cooling appliance.

### DESCRIPTION OF A PREFERRED EMBODIMENT

To clearly show the nature and scope of the advantageous application of the cooling appliance that comprises the object of the claimed invention, following is a description of its structure with reference to the drawings which, because they represent a preferential execution of this object on an informative basis, should be considered in the broadest sense of the word and not as limitative of the application and the content of the claimed invention.

The cooling appliance consists of a main tank (1), into which the water at ambient temperature is introduced. Thanks to a pump (2), this water is moved vertically to another cooling tank (3), where a PCB (4) (intelligent system) controls the measurement of the enclosure's inside and outside temperature by means of sensors (5, 6), measures the temperature differential, and connects some compressors (7) that rapidly reach the appropriate temperature for cooling the water.

The now cold water then falls by gravity to a drip tank (8). This drip tank (8) is provided with micro-openings through which the water again falls by gravity to pass through a filter (9). In practice, this filter (9) is made of several layers of porous material that become soaked with water and, thanks to a fan (10), the cold air is expelled to the exterior. The above mentioned PCB (4) also controls proper operation of the water pump (2), the compressors (7) and the fan (10) power, to achieve optimal cooling.

## Claims

1. Cooling appliance, **characterized by** the fact that it consists of a device (1) into which the water a ambient temperature is introduced, and the water is continuously moved by means of a hoisting pump (2) to the cooling tank (3), where some compressors (7) cool the water; and that, once the water is cold, it falls by gravity to a drip tank (8) provided with some micro-openings through which the water gradually falls by gravity to pass through the filter (9), which has layers of porous material that become soaked with the cold water, with the cold air being expelled by a fan (10) opposite this filter (9).

2. Cooling appliance, according to claim 1, **characterized by** the fact that the PCB (intelligent system) controls proper operation of the water pump (2), the compressors (7), the fan (10) power, and the sensors (5, 6) that measure the enclosure's inside and outside temperature.
